# FASCICULE DE BREVET EUROPEEN

(11) **EP 1 049 968 B1**
(45) Date de publication et mention de la délivrance du brevet: **02.01.2003**
(21) Numéro de dépôt: 99900955.8
(22) Date de dépôt: 20.01.1999
(51) Int. Cl.: G06F 1/00, G06F 12/14

(54) **SYSTEME ET PROCEDE DE GESTION DE SECURITE D'APPLICATIONS INFORMATIQUES**
SYSTEM UND VERFAHREN ZUR SICHEREN VERWALTUNG VON RECHNERANWENDUNGEN
SYSTEM AND METHOD FOR MANAGING COMPUTER APPLICATIONS SECURITY

(30) Priorité: 29.01.1998 FR 9801008
(43) Date de publication de la demande: 08.11.2000
(73) Titulaire: Gemplus, 13881 Gémenos Cedex (FR)
(72) Inventeur: COULIER, Charles, F-13360 Roquevaire (FR); BRUN, Philippe, F-13600 La Ciotat (FR)
(86) Numéro de dépôt international: FR9900096
(87) Numéro de publication internationale: WO99039257

(56) Documents cités:
- EP-A- 0 477 039
- EP-A- 0 617 387
- EP-A- 0 661 651
- US-A- 5 129 083
- US-A- 5 469 556

## Description

L'invention concerne les systèmes informatiques et, plus particulièrement dans de tels systèmes, un système et procédé pour gérer les conditions d'accès aux différentes applications qui sont susceptibles d'être mises en oeuvre par ces systèmes informatiques (voir EP-A-0 617 387). L'invention est préférentiellement, mais non limitativement, destinée à être mise en oeuvre dans les microprocesseurs des cartes à puce quel que soit le domaine d'utilisation: santé, banque, transport, téléphone mobile etc ...

Les procédés connus de gestion de sécurité présentent les principaux inconvénients suivants:
- le premier inconvénient est une obligation de présenter une hiérarchie pour sélectionner une application, c'est-à-dire qu'il faut passer par une chemin de sélection imposé en commençant par l'application "grand-mère", puis l'application "mère" pour arriver à l'application "fille", c'est-à-dire un chemin de sélection analogue à celui pour sélectionner un fichier dans un répertoire d'un disque dur ; en outre, il n'y a rien de prévu au sujet de la sécurité.
   Il n'existe donc pas de relation entre le niveau de la sélection et celui de la sécurité.
- Le second inconvénient est de limiter le nombre de niveaux de sécurité ou le nombre d'applications. En effet, à chaque application est dédié un registre de sécurité qui mémorise les droits acquis par cette application par la connaissance de secrets. Pour rajouter n niveaux, c'est-à-dire disposer d'une série multi-applicative, il faut associer, par exemple, un registre de sécurité à chaque application, ce qui conduit à utiliser une partie importante de la mémoire rapide où sont stockés les registres de sécurité. Comme la capacité de cette mémoire rapide est limitée, il n'est pas souhaitable d'y stocker de nombreux registres de sécurité. C'est ainsi que dans certains systèmes, le nombre de niveaux hiérarchiques ou le nombre d'applications a été limité à trois, soit trois registres de sécurité.
- Le troisième inconvénient est d'empêcher "l'émancipation" simple des applications, c'est-à-dire rendre une application "fille" indépendante de son application "mère". En effet, lors d'une création d'une nouvelle application, il est indispensable d'utiliser les droits et secrets de l'application "mère" qui sont les seuls disponibles et ce jusqu'à la création des secrets propres à l'application "fille".

Le but de la présente invention est de mettre en oeuvre un procédé de gestion de sécurité d'applications informatiques qui ne présente pas les inconvénients exposés ci-dessus et qui permet donc:
- de ne pas être limité en nombre de niveaux hiérarchiques ou nombre d'applications, et
- de rendre un application "fille" indépendante de l'application "mère" sans passer par cette dernière du point de vue de la sécurité.

L'invention concerne donc un système de gestion de la sécurité d'applications informatiques, caractérisé en ce que:
- les applications informatiques sont enregistrées dans des fichiers répertoires organisés suivant une arborescence à n niveaux, le répertoire de niveau 1 étant de niveau le plus élevé, et
- un nombre r de registres de sécurité pouvant être affectés chacun à un seul répertoire et chaque registre de sécurité contenant l'ensemble des droits ou secrets Si à Sp qui ont été octroyés sous un répertoire.

L'invention concerne également un procédé de gestion de la sécurité d'applications informatiques dans le système de gestion décrit ci-dessus, caractérisé en ce qu'il comprend les étapes suivantes consistant à:
(a) mémoriser dans des registres de sécurité les droits octroyés sous un répertoire selon des règles déterminées,
(b) rechercher dans l'arborescence les secrets présentés, et
(c) vérifier la connaissance équivalente à un (ou des) droits au niveau de l'application informatique pour satisfaire les conditions d'accès.

D'autres caractéristiques et avantages de la présente invention apparaîtront à la lecture de la description suivante d'exemples particuliers de réalisation, ladite description étant faite en relation avec les dossiers joints dans lesquels:
- la figure 1 est un exemple de structure arborescente des répertoires;
- les figures 2.1 à 2.14 illustrent des exemples d'application des trois règles d'attribution ou de désaffection d'un registre de sécurité à un répertoire;
- les figures 3.1a à 3.6a et 3.1b à 3.6b illustrent des exemples d'application de la règle de présentation d'un secret; et
- les figures 4.1 à 4.6 illustrent des exemples d'application de la règle de vérification de l'octroi du droit requis.

L'invention sera décrite dans son application à une carte à puce et, plus précisément, à un microprocesseur utilisé dans une carte à puce. Cependant, elle est également applicable à tout système informatique où il est nécessaire ou simplement souhaitable que certains services ou fonctions offerts par le système soient accessibles seulement à certains utilisateurs ou opérateurs.

Dans le cas de cartes à puce, par exemple une carte bancaire ou une carte de téléphone mobile, les services ou fonctions qui sont à la disposition de l'utilisateur peuvent être soumis à autorisation selon le type d'abonnement souscrit, ces autorisations (ou droits) étant octroyées en prouvant la connaissance de secrets qui permettent l'accès aux fichiers nécessaires à la mise en oeuvre du service ou de la fonction.

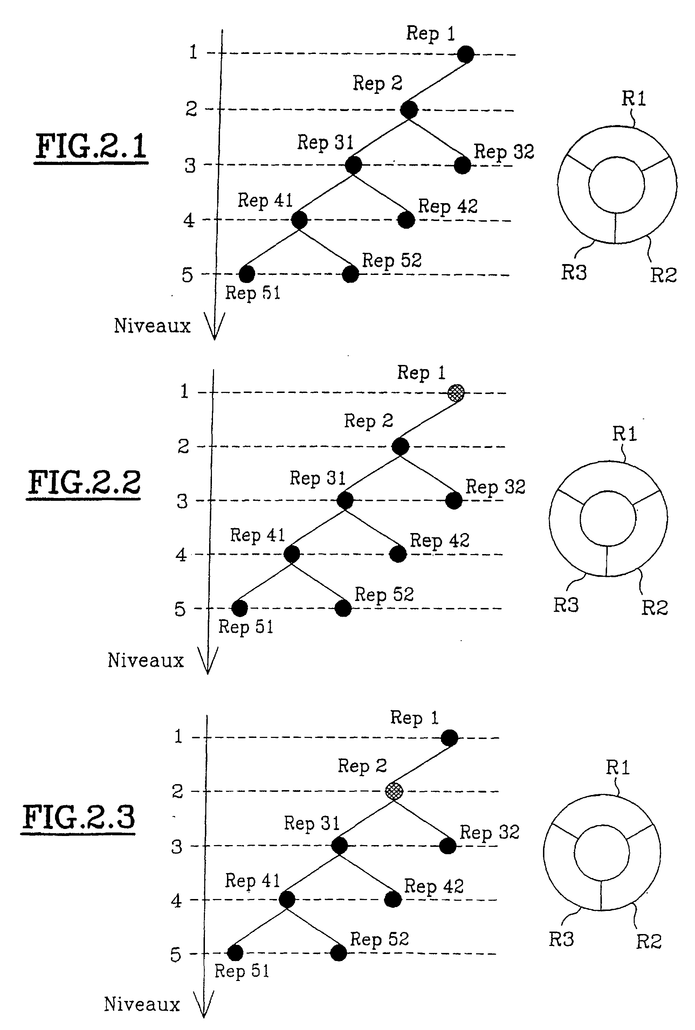

Dans la suite de la description, les définitions suivantes seront adoptées:
- Un fichier est un ensemble de données pouvant être protégées par des conditions d'accès.
- Un répertoire Rep est un ensemble de fichiers et/ou de répertoires selon une organisation arborescente (figure 1); habituellement un répertoire est dédié uniquement à une application.
- Les conditions d'accès à un fichier ou à un répertoire Rep définissent les critères à remplir, telle que la présentation d'un code secret ou une authentification externe, pour pouvoir effectuer telle ou telle fonction sur le fichier ou le répertoire;
- Les fichiers et répertoires sont organisés suivant une arborescence à plusieurs niveaux dont le répertoire de plus haut niveau (niveau 1) est appelé "répertoire racine" ou racine de l'arborescence. Un niveau caractérise les répertoires ayant le même degré hiérarchique. L'utilisation de répertoires permet de structurer les données d'une carte à puce. Sur la figure 1, seuls les répertoires Rep1, Rep2, Rep31, Rep32, Rep41, Rep42, Rep51 et Rep52 ont été présentés et chacun peut contenir un ou plusieurs fichiers. Le répertoire Rep1 est la racine de l'arborescence comprenant n=5 niveaux de répertoires, les répertoires Rep41 et Rep42 appartenant au niveau i=4.
- Un registre de sécurité R contient l'ensemble des droits qui ont été octroyés sous un répertoire et un droit est la preuve de la connaissance d'un secret qui est identifié par une référence telle qu'un nom, un numéro, un identificateur. Il y a plusieurs façons de prouver la connaissance d'un secret, par exemple par échange de la valeur du secret entre le terminal et la carte à puce ou par échange de données calculées à l'aide de ce secret: l'opération s'appelle présentation du secret.

D'une manière générale, le fondement de la sécurité sur une carte à puce est de pouvoir subordonner l'utilisation du service ou de la fonction de la carte à puce à la preuve de la connaissance d'un ou plusieurs secrets. Ainsi pour pouvoir utiliser une fonction de la carte, il faut:
- que la carte à puce mémorise préalablement cette preuve de la connaissance du ou des secrets dans un registre de sécurité,
- que le porteur de la carte à puce ou le terminal prouve qu'il a connaissance du (ou des) secret(s) protégeant la fonction,
- que la carte vérifie, lors de l'utilisation de la fonction, que le (ou les) secret(s) est (sont) bien connu(s) .

L'invention réside dans les étapes du procédé consistant à:
(a) mémoriser dans la carte à puce la connaissance du (ou de(s)) secret(s) c'est-à-dire les droits octroyés, selon des règles d'attribution et de désaffection d'un registre de sécurité à un répertoire,
(b) rechercher dans l'arborescence le (ou les) secret(s) présenté(s),
(c) vérifier la connaissance du (ou des) secret(s) pour remplir les conditions d'accès.

Pour mémoriser la connaissance d'un secret dans une carte à puce (étape (a)), il est nécessaire de présenter correctement le secret, ce qui revient à prouver que l'extérieur, par exemple un terminal ou un porteur de carte, a la connaissance dudit secret, cette connaissance lui conférant un droit d'utilisation de fonctions ou de services offerts par la carte. C'est le droit qui est mémorisé dans un registre de sécurité à raison d'un registre par application.

Un registre de sécurité R comprend un nombre p de chiffres ou positions, chaque position étant affectée à la connaissance d'un secret correspondant à un droit octroyé. Un registre à p=8 positions pourra enregistrer la connaissance de huit secrets S1 à S8 qui correspondront à huit droits octroyés.

Le nombre r de registres de sécurité R peut être quelconque et l'exemple qui sera décrit en comportera r=3. Les registres de sécurité ne sont pas dédiés à un niveau ou à un répertoire donné comme dans l'art antérieur et le lien entre un répertoire et un registre de sécurité est dynamique, c'est-à-dire que ce lien peut être créé ou rompu conformément aux règles du procédé selon l'invention.

Pour mémoriser un droit dans un répertoire, il faut d'abord attribuer ou désaffecter un registre de sécurité à un répertoire selon les trois règles RG1 à RG3 suivantes:

### Règle RG1:

Un registre est attribué au répertoire courant dès lors qu'un droit est octroyé sous ce répertoire, par exemple un code secret ou une authentification. Si un droit a déjà été octroyé sous ce répertoire, le registre dédié à celui-ci est mis à jour.

### Règle RG2:

La sélection d'un nouveau répertoire entraîne la perte du lien reliant l'ancien répertoire courant à son registre de sécurité sauf si le répertoire sélectionné est "fils" de l'ancien répertoire courant.

### Règle RG3:

Si le nombre r de registres de sécurité est saturé, c'est-à-dire que les r=3 de l'exemple décrit sont utilisés, le registre le plus anciennement affecté, c'est-à-dire le niveau le plus haut dans l'arborescence, est attribué au nouveau répertoire courant conformément à la règle RG1.

Il est à remarquer que l'application de la règle RG2 rend impossible l'attribution de deux registres de sécurité à un même niveau, de sorte que l'attribution d'un registre de sécurité à un répertoire peut être matérialisée par un niveau hiérarchique Ni affecté au registre de sécurité concerné, i variant de 1 à n.

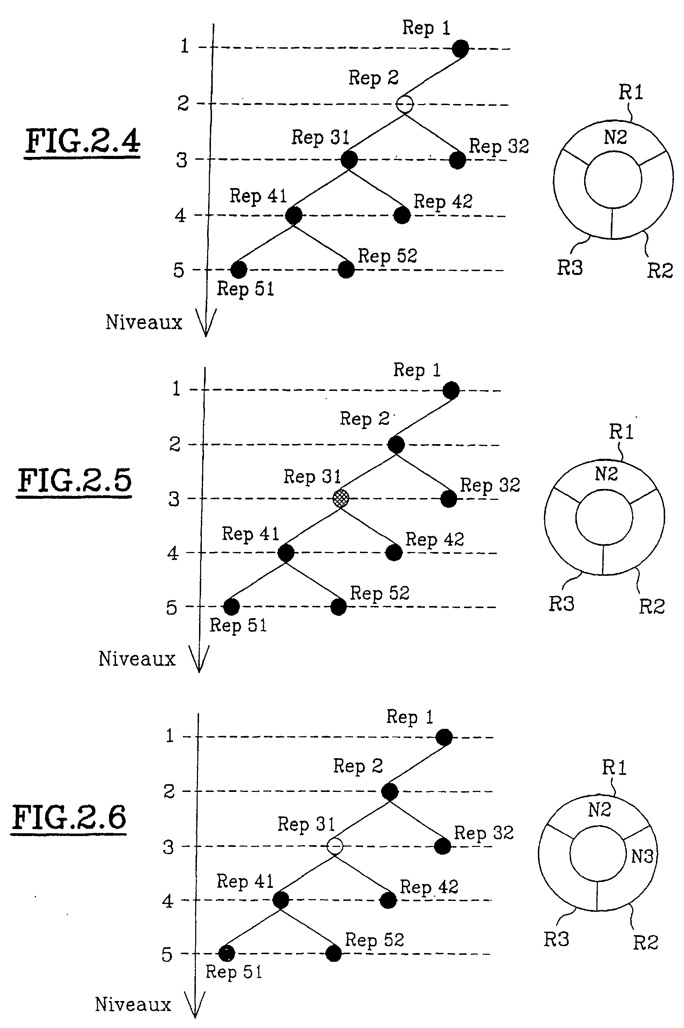

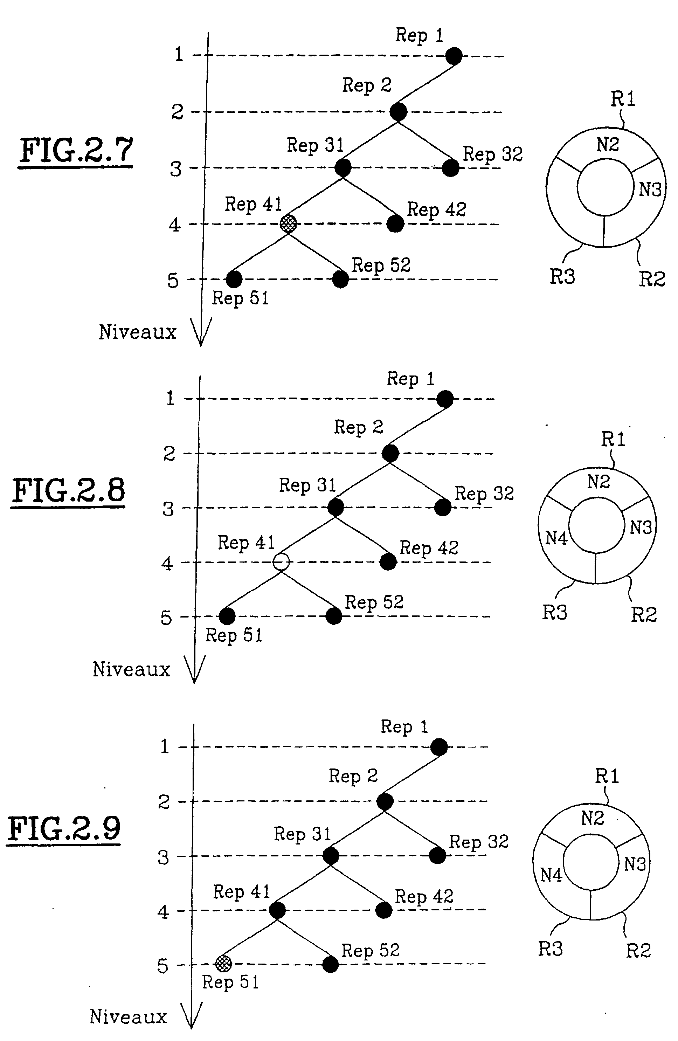

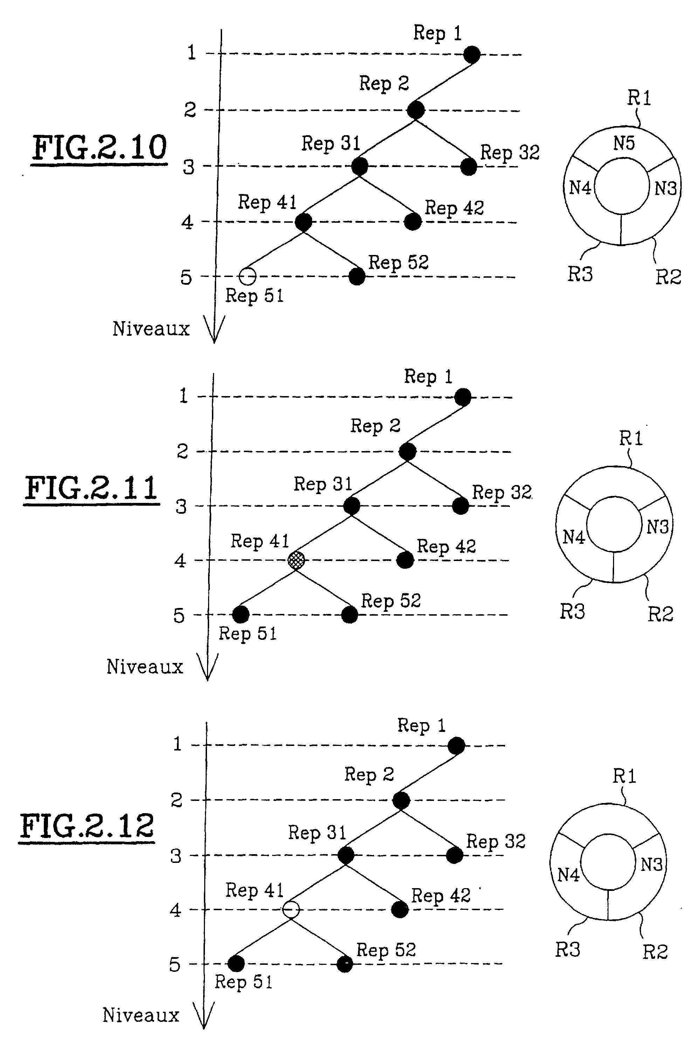

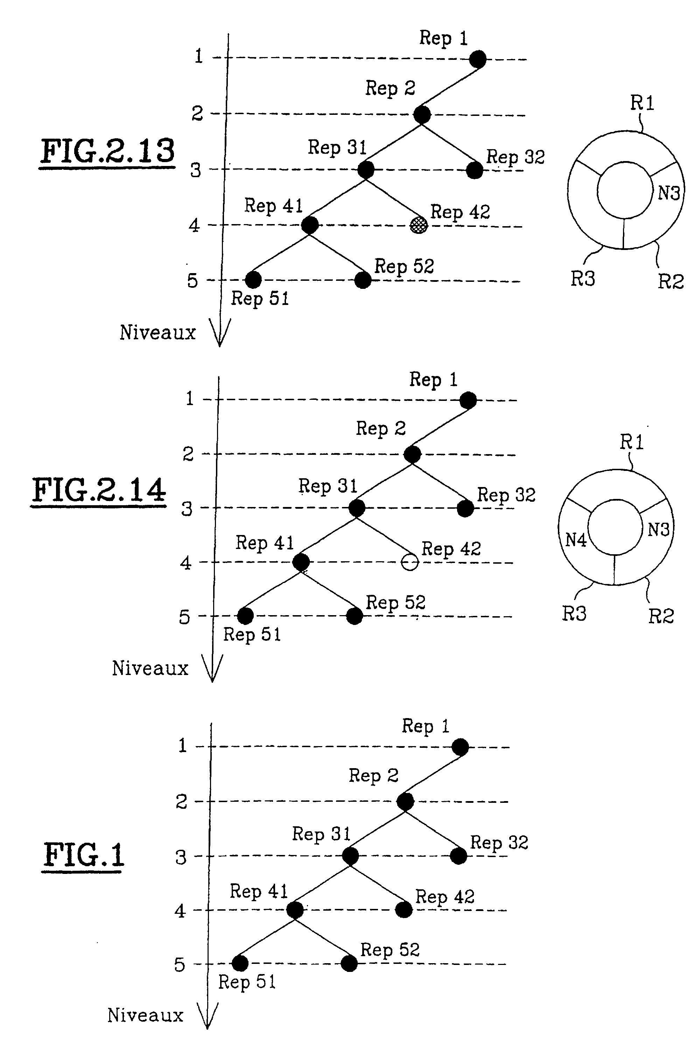

Les figures 2.1 à 2.14 illustrent des applications des règles RG1, RG2 et RG3. Sur ces figures et les autres, un cercle noir désigne un répertoire, un cercle gris désigne un répertoire sélectionné et un cercle blanc désigne un répertoire sélectionné avec un droit levé.

La figure 2.1 illustre l'absence de sélection d'un répertoire tandis que les figures 2.2 et 2.3 illustrent respectivement la sélection des répertoires Rep1 et Rep2.

Ainsi, l'application de la règle RG1 est illustrée dans les figures 2.4, 2.6, 2.8, 2.10, 2.12 et 2.14. La figure 2.4 illustre la présentation d'un secret sous le répertoire Rep2 de niveau N2. La figure 2.6 illustre la présentation d'un secret sous le répertoire Rep31 de niveau N3. La figure 2.8 illustre la présentation d'un droit sous le répertoire Rep41 de niveau N4. La figure 2.10 illustre la présentation d'un droit sous le répertoire Rep51 de niveau N5. La figure 2.12 illustre la présentation d'un droit sous le répertoire Rep41. La figure 2.14 illustre la présentation d'un droit sous le répertoire Rep42.

L'application de la règle RG2 est illustrée par les figures 2.5, 2.7 et 2.9 en ce qui concerne le maintien du lien entre un registre de sécurité et son répertoire lors de la sélection d'un nouveau répertoire "fils" de celui-ci.

Les figures 2.5, 2.7 et 2.9 illustrent respectivement la sélection du répertoire Rep31, Rep41 ou Rep51.

L'application de la règle RG2 est illustrée par les figures 2.11 et 2.13 en ce qui concerne la rupture du lien entre un registre de sécurité et son répertoire. Ainsi, la figure 2.11 illustre la sélection du répertoire Rep41 tandis que la figure 2.13 illustre la sélection du répertoire Rep42.

L'application de la règle RG3 est illustrée par la figure 2.10 dans laquelle le registre le plus anciennement affecté R1 est attribué au nouveau répertoire sélectionné Rep51.

L'étape (a) consistant à mémoriser les droits attachés à la connaissance des secrets étant réalisée, l'étape (b) consistant à rechercher dans l'arborescence le secret présenté par le porteur de la carte à puce ou par le terminal peut être mise en oeuvre.

Un secret présenté au niveau d'une application confère un droit d'utilisation au niveau de cette même application. Ainsi, la présentation réussie d'un secret au sein d'une application de niveau hiérarchique Ni met à jour le registre de sécurité dédié à ce niveau hiérarchique, conformément à la règle RG1, même si le secret présenté est physiquement situé dans un niveau hiérarchique supérieur.

La règle de présentation d'un secret est la suivante:

### Règle RG4:

La présentation d'un secret de référence S revient à vérifier que le porteur de la carte à puce ou le terminal connaît la valeur du premier secret de référence S trouvé en parcourant l'axe hiérarchique de l'application courante vers le répertoire racine.

La présentation du secret de référence S au niveau de l'application courante située au niveau hiérarchique Ni est réalisée par les étapes intermédiaires suivantes consistant à:
(b1) rechercher un secret de référence S dans le répertoire courant, c'est-à-dire au niveau Ni, à l'aide du système de gestion de sécurité et vérifier l'existence de ce secret au sein de l'application;
(b2) si ce secret existe, vérifier que la présentation du secret est réussie, par exemple valeur pour un code secret, cryptogramme pour une clé, etc ...,

Si la présentation est réussie, le droit associé au secret de référence S est octroyé au niveau de l'application courante de niveau Ni.

Si la présentation a échoué, le droit associé au secret de référence S n'est pas octroyé et la tentative de présentation est terminée.
(b3) Si le secret de référence S n'existe pas au sein de l'application courante de niveau Ni, rechercher si un secret de même référence existe au sein de l'application parente de niveau N(i-1) de l'application courante.
(b4) Si le secret existe au niveau de l'application parente de niveau N(i-1), vérifier que la présentation est réussie.

Si la présentation est réussie, le droit associé au secret de référence S est octroyé au niveau de l'application courante de niveau Ni.

Si la présentation a échoué, le droit associé au secret de référence S n'est pas octroyé et la tentative de présentation est terminée.
(b5) Si le secret de référence S n'existe pas au sein de l'application parente de niveau N(i-1), rechercher le secret de référence S au niveau N(i-2) suivant l'axe hiérarchique, et ainsi de suite tant que l'existence d'un secret de référence S n'a pas été découverte.
(b6) Si le secret de référence S n'a pas été trouvé, la tentative de présentation est terminée.

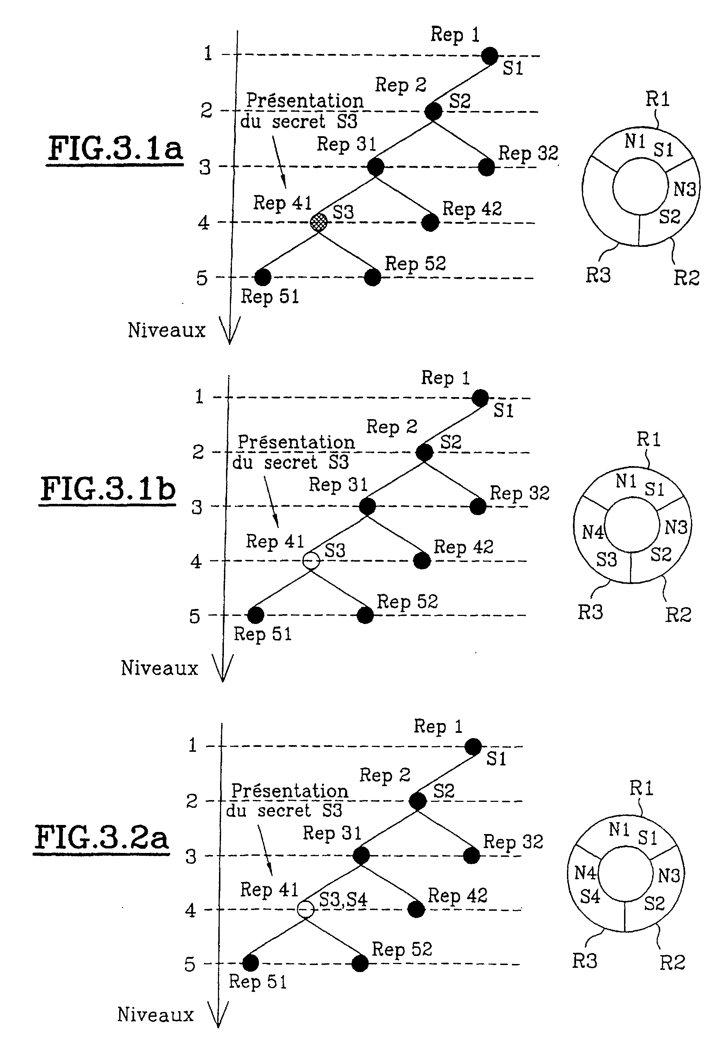

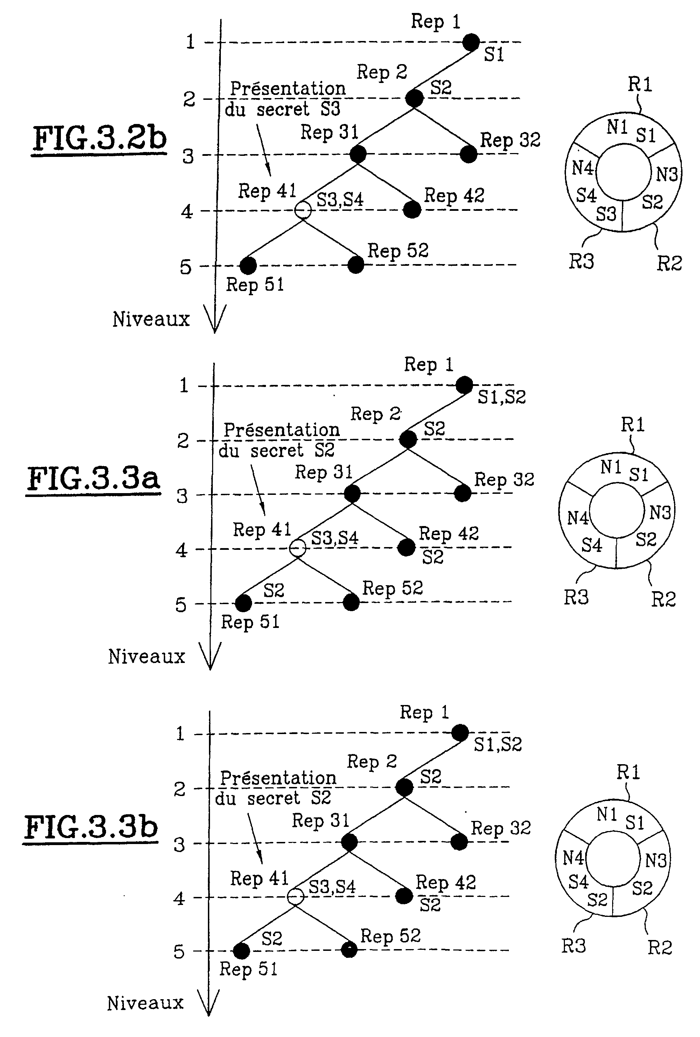

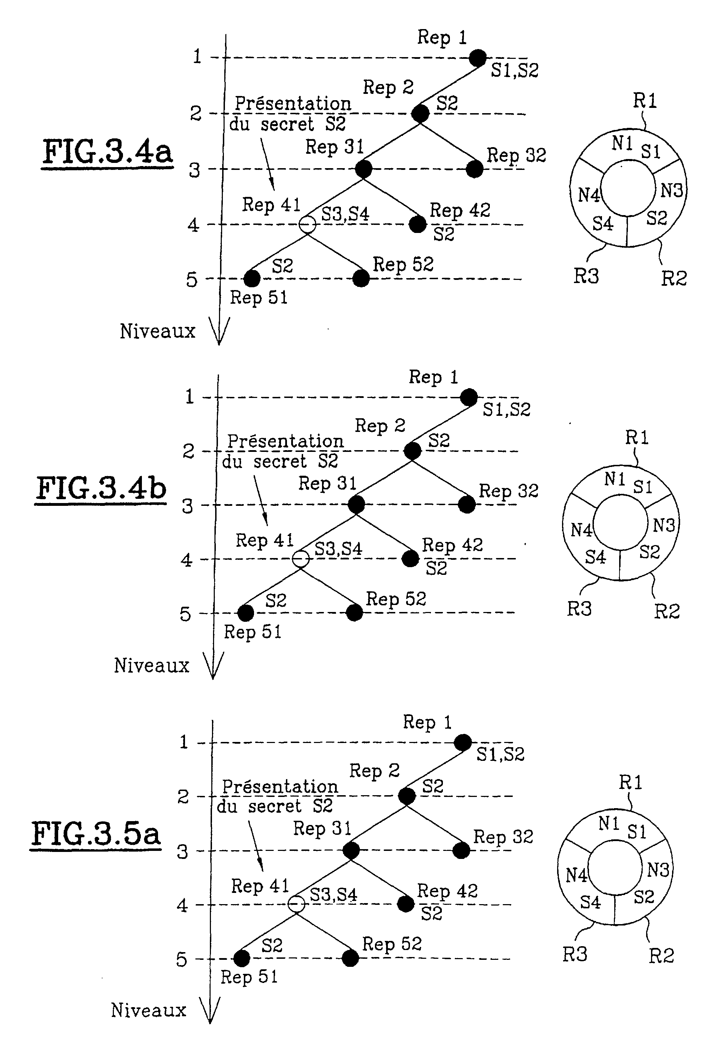

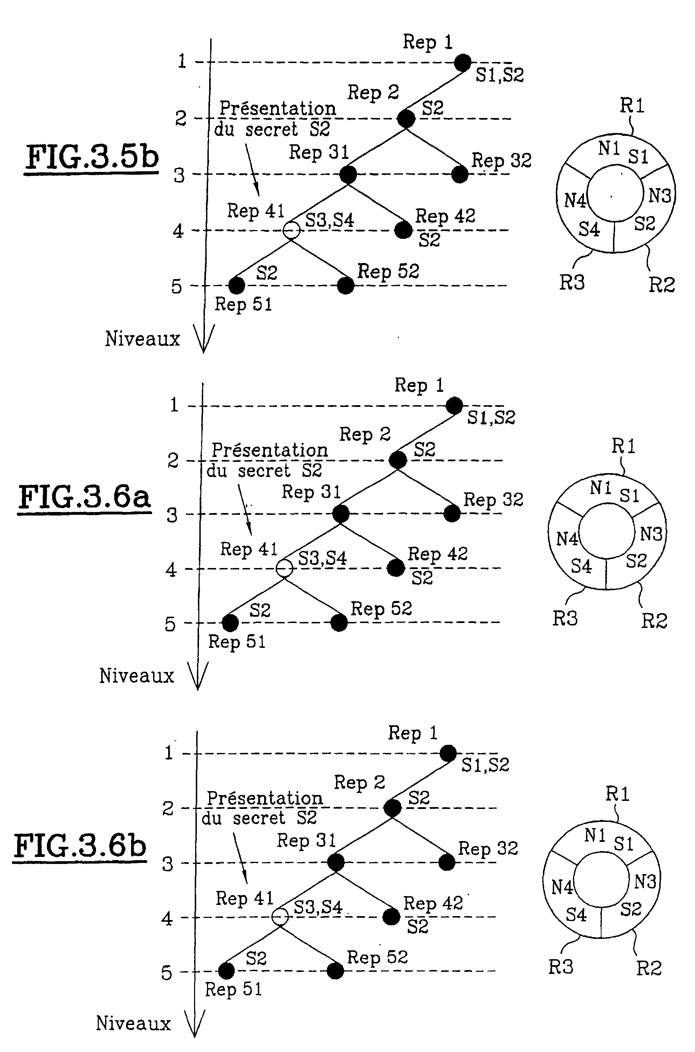

Plusieurs exemples d'application de la règle RG4 sont illustrés sur les figures 3.1a à 3.6a et 3.1b à 3.6b. Les figures 3.1a et 3.1b, 3.2a et 3.2b, 3.3a et 3.3b correspondent à des exemples où le droit est octroyé tandis que les figures 3.4a et 3.4b, 3.5a et 3.5b, 3.6a et 3.6b correspondent à des exemples où le droit n'est pas octroyé.

Sur la figure 3.1a, le secret S3 existe en local sous le répertoire Rep41 et aucun registre n'est attribué au répertoire Rep41. Sur la figure 3.1b, la connaissance du secret S3 est prouvée ; un registre R3 est affecté au répertoire Rep41 de niveau N4 et le droit est octroyé.

Sur la figure 3.2a, le secret S3 existe en local sous le répertoire Rep41 et un registre R3 est déjà attribué au répertoire Rep41. La connaissance du secret S3 est donc prouvée et le registre de sécurité R3 affecté au répertoire Rep41 est mis à jour (S3) de sorte que le droit est octroyé (figure 3.2b).

Sur la figure 3.3a, le secret S2 n'existe pas en local sous le répertoire Rep41 ; un registre R3 est déjà attribué au répertoire Rep41 et un secret S2 existe à la fois sous les répertoires Rep2, Rep1, Rep42 et Rep51. La connaissance du secret S2 est donc prouvée et le registre de sécurité affecté au répertoire Rep41 est mis à jour de sorte que le droit est octroyé (figure 3.3b).

Sur la figure 3.4a, le secret S2 n'existe pas en local sous le répertoire Rep41 ; un registre R3 est déjà attribué au répertoire Rep41 et un secret S2 existe à la fois sous les répertoires Rep2, Rep1, Rep42 et Rep51. La connaissance du secret S2 n'est donc pas prouvée de sorte que le registre de sécurité R3 affecté au répertoire Rep41 n'est pas mis à jour et que le droit n'est pas octroyé (figure 3.4b).

Sur la figure 3.5a, le secret S2 n'existe pas en local sous le répertoire Rep41 ; un registre R3 est déjà attribué au répertoire Rep41 et un secret S2 existe à la fois sous les répertoires Rep2, Rep1, Rep42 et Rep51. La connaissance du secret S2 n'est donc pas prouvée de sorte que le registre de sécurité R3 affecté au répertoire Rep41 n'est pas mis à jour et le droit n'est pas octroyé (figure 3.5b).

Sur la figure 3.6a, le secret S2 n'existe pas en local sous le répertoire Rep41 ; un registre R3 est déjà attribué au répertoire Rep41 et un secret S2 existe à la fois sous les répertoires Rep2, Rep1, Rep42 et Rep51. La connaissance du secret S2 n'est pas prouvée de sorte que le registre de sécurité R3 affecté au répertoire Rep41 n'est pas mis à jour et le droit n'est pas octroyé (figure 3.6b).

L'étape (c) consiste à vérifier que la connaissance du (ou des) secret(s) pour remplir les conditions d'accès, c'est-à-dire vérifier que le secret protégeant l'utilisation d'une fonction et d'un service de la carte à puce est bien connu du monde extérieur, c'est-à-dire que le droit requis a bien été octroyé.

A cet effet, l'invention met en oeuvre une cinquième règle RG5 qui s'énonce de la manière suivante:

### Règle RG5:

Une fonction, nécessitant la connaissance d'un secret S, est autorisée si et seulement si, en parcourant l'arborescence suivant l'axe hiérarchique de l'application courante vers l'application racine, le premier secret S rencontré est connu, c'est-à-dire correctement présenté, par au moins l'une des applications appartenant à la section arborescente ayant pour bornes l'application courante et l'application contenant le secret S, ces applications pouvant être confondues si le secret S existe dans l'application courante.

Pour réaliser l'étape (c), le système de gestion doit effectuer les étapes suivantes consistant à:
(c1) vérifier qu'un registre de sécurité est associé à l'application courante du niveau Ni;
(c2) autoriser la fonction si le registre de sécurité contient le droit requis et terminer la vérification;
(c3) rechercher l'existence du secret de référence S au sein de l'application courante de niveau Ni si aucun registre de sécurité n'est associé à l'application courante ou si le registre associé ne contient pas le doit requis;
(c4) refuser la fonction et terminer la vérification si le secret existe au sein de l'application courante;
(c5) vérifier qu'un registre de sécurité est associé à l'application parente de niveau N(i-1) de l'application courante si le secret de référence S n'existe pas au sein de l'application courante de niveau Ni;
(c6) autoriser la fonction et terminer la vérification si le registre de sécurité associé à l'application parente contient le droit requis pour utiliser la fonction;
(c7) rechercher l'existence du secret de référence S au sein de l'application parente de niveau N(i-1) de l'application courante si aucun registre de sécurité n'est associé à l'application parente ou si le registre de sécurité associé ne contient pas le droit requis;
(c8) refuser la fonction et terminer la vérification si le secret de référence S existe au sein de l'application parente de niveau N(i-1);
(c9) vérifier qu'un registre de sécurité est associé à l'application grand-parente de niveau N(i-2) de l'application courante suivant l'axe hiérarchique de l'application courante vers l'application racine, si le secret de référence S n'existe pas au sein de l'application parente de niveau N(i-1),
   et ainsi de suite tant que l'existence du secret de référence S n'a pas été découvert;
(c10) refuser la fonction et terminer la vérification si le secret n'a pas été découvert.

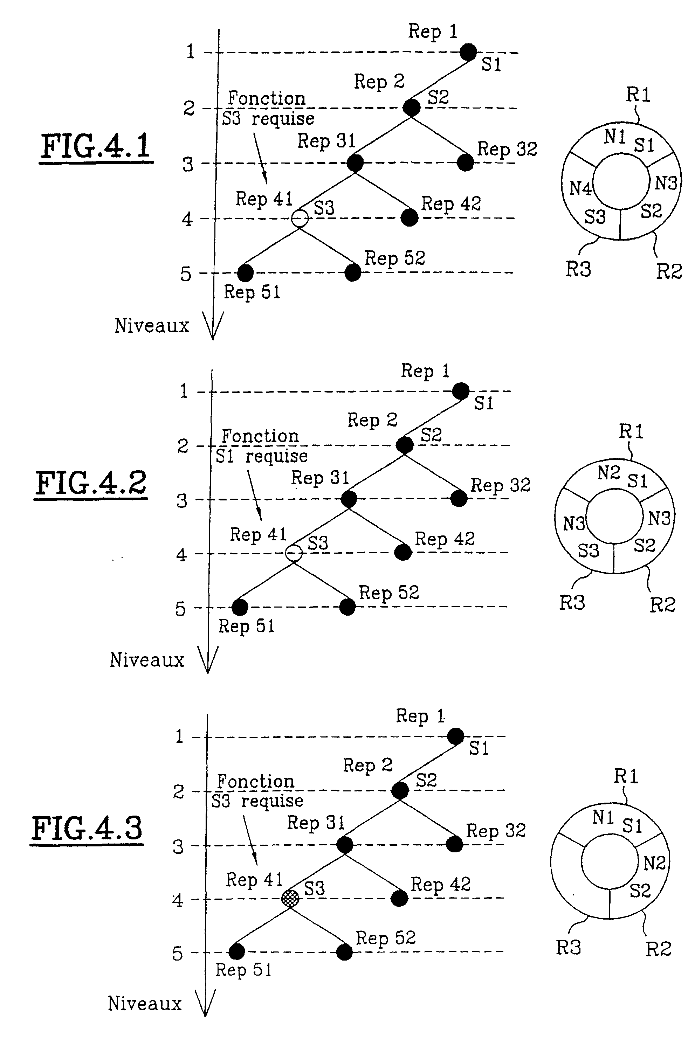

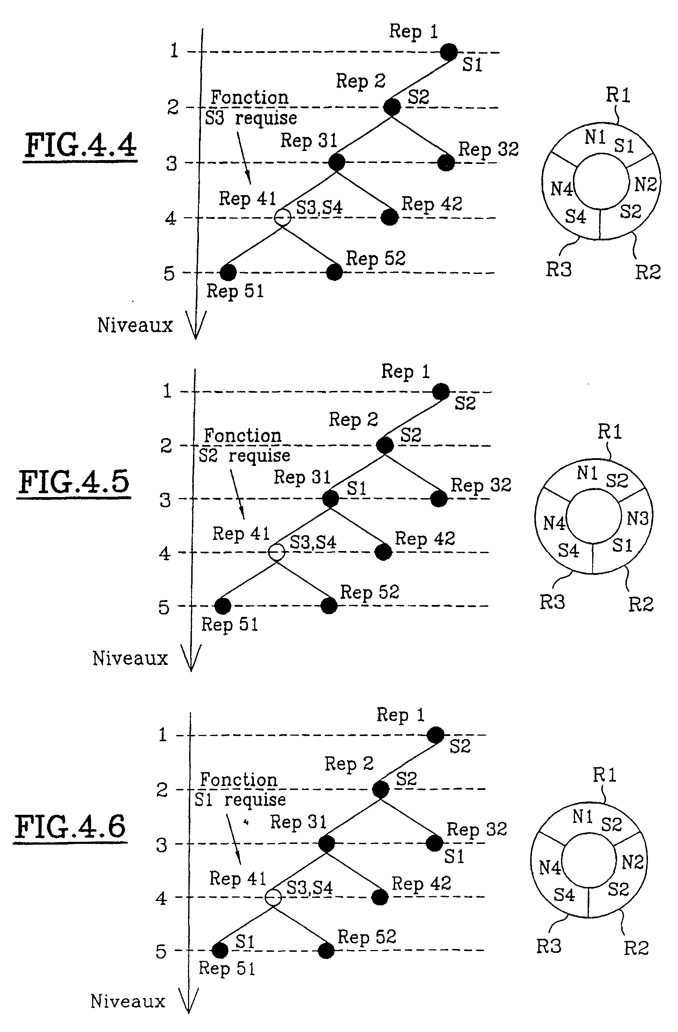

Les figures 4.1 et 4.2 illustrent deux exemples de fonction autorisée tandis que les figures 4.3, 4.4, 4.5 et 4.6 illustrent quatre exemples de fonction refusée.

Sur la figure 4.1, la fonction est acceptée car le secret S3 existe en local, et que celui-ci est connu sous le répertoire Rep41.

Sur la figure 4.2, la fonction est acceptée car le secret S1 n'existe pas en local mais que celui-ci est connu sous le répertoire Rep2.

Sur la figure 4.3, la fonction est rejetée car le secret S3 existe en local sous le répertoire Rep41 et qu'aucun droit n'a été octroyé sous ce répertoire.

Sur la figure 4.4, la fonction est rejetée car le secret S3 existe en local sous le répertoire Rep 41 et que, bien qu'un registre de sécurité R3 soit affecté au répertoire Rep41, la connaissance du secret S3 n'a pas été prouvée.

Sur la figure 4.5, la fonction est rejetée car le secret S2, qui n'existe pas en local sous le répertoire Rep41, ni dans le répertoire Rep31, existe sous le répertoire Rep2 et qu'aucun registre de sécurité n'est affecté au répertoire Rep2. Il est à remarquer que la fonction est rejetée bien qu'un secret S2 soit connu sous le répertoire Rep1.

Sur la figure 4.6, la fonction est rejetée car le secret Si n'a pas été trouvé en parcourant l'axe hiérarchique du répertoire Rep41 vers le répertoire Rep1 et ce, bien qu'un secret Si existe sous les répertoires Rep51 et Rep32.

## Revendications

1. Système de gestion de la sécurité d'applications informatiques, **caractérisé en ce que**:
- les applications informatiques sont enregistrées dans des fichiers de répertoires (Rep1, Rep2, Rep31, Rep32, Rep41, Rep 42, Rep51, Rep52) organisés suivant une arborescence à n niveaux, le répertoire de niveau 1 (Rep1) étant de niveau le plus élevé, et
- un nombre r de registres de sécurité (R) pouvant être affectés chacun à un seul répertoire et chaque registre de sécurité (R) contenant l'ensemble des droits ou secrets Si à Sp qui ont été octroyés sous un répertoire.

2. Procédé de gestion de la sécurité d'applications informatiques dans un système selon la revendication 1, **caractérisé en ce qu'**il comprend les étapes suivantes consistant à:
(a) mémoriser dans des registres de sécurité (R) les droits octroyés (S1 à Sp) sous un répertoire (Rep) selon des règles déterminées (RG1, RG2, RG3),
(b) rechercher dans l'arborescence le secret présenté, et
(c) vérifier la connaissance du (ou des) droits au niveau de l'application informatique.

3. Procédé selon la revendication 2, **caractérisé en ce que** les règles de mémorisation de l'étape (a) sont les suivantes:
(RG1): attribution d'un registre de sécurité (R) au répertoire courant dès l'octroi d'un droit sous ce répertoire ou mise à jour dudit registre de sécurité si un droit a déjà été octroyé sous ce répertoire,
(RG2) perte du lien reliant l'ancien répertoire courant à son registre de sécurité lors de la sélection d'un nouveau répertoire sauf si le répertoire sélectionné est le fils de l'ancien répertoire courant;
(RG3) attribution du registre de sécurité le plus anciennement attribué au nouveau répertoire courant si les registres de sécurité sont tous attribués.

4. Procédé selon la revendication 2 ou 3, **caractérisé en ce que** l'étape (b) consiste à appliquer la règle suivante consistant à:
(RG4) vérifier que le secret présenté (S) est connu dans le répertoire courant (Ni) ou dans un répertoire de niveau supérieur.

5. Procédé selon la revendication 2, 3 ou 4, **caractérisé en ce que** l'étape (b) comprend les étapes intermédiaires suivantes consistant à:
(b1) rechercher un secret dans le répertoire courant de niveau (Ni) et vérifier l'existence du secret (S) au sein de l'application,
(b2) si ce secret (S) existe, vérifier que la présentation du secret est réussie;
= si la présentation est réussie, le droit associé au secret (S) est octroyé au niveau (Ni) de l'application courante;
= si la présentation a échoué, le droit associé au secret (S) n'est pas octroyé et la tentative de présentation est terminée;
(b3) si ce secret (S) n'existe pas dans l'application courante de niveau (Ni), rechercher si ce secret (S) existe au sein de l'application parente de niveau N(i-1).
(b4) Si ce secret (S) existe dans l'application parente de niveau B(i-1 vérifier que la présentation est réussie:
= si la présentation est. réussie, le droit associé au secret (S) est octroyé dans l'application courante de niveau (Ni),
= si la présentation a échoué, le droit associé au secret (S) n'est pas octroyé et la tentative de présentation est terminée;
(b5) si le secret n'existe pas au sein de l'application parente de niveau N(i-1), rechercher l'existence du secret (S) au niveau de l'application de niveau N(i-2) suivant l'axe hiérarchique et vérifier que la présentation est réussie,
et ainsi de suite jusqu'au niveau hiérarchique le plus élevé tant que l'existence du secret (S) n'a pas été découvert;
(b6) Si le secret (S) n'a pas été découvert, la tentative de présentation est terminée.

6. Procédé selon l'une des revendications précédentes 2 à 5, **caractérisé en ce que** l'étape (c) consiste à appliquer la règle suivante consistant à:
(RG5) Autorisation d'une fonction nécessitant la connaissance d'un secret (S) si et seulement si, en parcourant l'arborescence suivant l'axe hiérarchique de l'application courante vers l'application racine, le premier secret (S) est connu par au moins l'une des applications appartenant à la section arborescente ayant pour bornes l'application courante et l'application contenant le secret (S).

7. Procédé selon l'une des revendications précédentes 1 à 6, **caractérisé en ce que** l'étape (c) comprend les étapes suivantes consistant à:
(c1) vérifier qu'un registre de sécurité est associé à l'application courante du niveau Ni;
(c2) autoriser la fonction si le registre de sécurité contient le droit requis et terminer la vérification;
(c3) rechercher l'existence du secret de référence S au sein de l'application courante de niveau Ni si aucun registre de sécurité n'est associé à l'application courante ou si le registre associé ne contient pas le doit requis;
(c4) refuser la fonction et terminer la vérification si le secret existe au sein de l'application courante;
(c5) vérifier qu'un registre de sécurité est associé à l'application parente de niveau N(i-1) de l'application courante si le secret de référence S n'existe pas au sein de l'application courante de niveau Ni;
(c6) autoriser la fonction et terminer la vérification si le registre de sécurité associé à l'application parente contient le droit requis pour utiliser la fonction;
(c7) rechercher l'existence du secret de référence S au sein de l'application parente de niveau N(i-1) de l'application courante si aucun registre de sécurité n'est associé à l'application parente ou si le registre de sécurité associé ne contient pas le droit requis;
(c8) refuser la fonction et terminer la vérification si le secret de référence S existe au sein de l'application parente de niveau N(i-1) ;
(c9) vérifier qu'un registre de sécurité est associé à l'application grand-parente de niveau N(i-2) de l'application courante suivant l'axe hiérarchique de l'application courante vers l'application racine, si le secret de référence S n'existe pas au sein de l'application parente de niveau N(i-1), et ainsi de suite tant que l'existence du secret de référence S n'a pas été découvert;
(c10) refuser la fonction et terminer la vérification si le secret n'a pas été découvert.

## Patentansprüche

1. Verwaltungssystem für die Sicherheit von IT-Anwendungen, **dadurch gekennzeichnet, dass**:
- die IT-Anwendungen in gemäß eines Baumes mit n Ebenen organisierten Dateienverzeichnissen (Ref.1, Ref.2, Ref.31, Ref.32, Ref.41, Ref. 42, Ref.51, Ref.52) gespeichert werden, wobei das Verzeichnis der Ebene 1 (Ref.1) sich auf der höchsten Ebene befindet, und
- eine Anzahl r an Sicherheitsregistern (R), die jeweils einem einzigen Verzeichnis zugeordnet werden kann und wobei jedes Sicherheitsregister (R) alle Rechte oder Geheimnisse S1 bis Sp beinhaltet, die in einem Verzeichnis gewährt worden sind.

2. Verwaltungsverfahren für die Sicherheit von IT-Anwendungen in einem System gemäß Anspruch 1, **dadurch gekennzeichnet, dass** es folgende Schritte beinhaltet, bestehend in:
(a) der Speicherung der unter einem Verzeichnis (Ref.) gemäß bestimmten Regeln (RG1, RG2, RG3) gewährten Rechte (S1 bis Sp) in Sicherheitsregistern,
(b) dem Suchen des dargestellten Geheimnisses im Baum und
(c) Überprüfung der Kenntnis des Rechts (oder der Rechte) auf der Ebene der IT-Anwendung.

3. Verfahren gemäß Anspruch 2, **dadurch gekennzeichnet, dass** die Speicherregeln der Stufe (a) folgende sind:
(RG1) Zuteilung eines Sicherheitsregisters (R) für das laufende Register sofort bei Gewährung eines Rechts unter diesem Verzeichnis oder Aktualisierung des besagten Sicherheitsregisters, wenn ein Recht bereits unter diesem Register gewährt worden ist.
(RG2) Verlust des das alte laufende Register mit seinem Sicherheitsregister verbindenden Links bei der Auswahl eines neuen Registers, es sei denn, das ausgewählte Register ist der Abkömmling des alten laufenden Registers;
(RG3) Zuteilung des als erstes zugeteilten Sicherheitsregisters zum neuen laufenden Register, wenn die Sicherheitsregister alle zugeteilt sind.

4. Verfahren gemäß Anspruch 2 oder 3, **dadurch gekennzeichnet, dass** die Stufe (b) in der Anwendung der folgenden Regel besteht, bestehend aus:
(RG4) der Überprüfung, dass das dargestellte Geheimnis (S) im laufenden Register (Ni) oder in einem Register einer höheren Ebene bekannt ist.

5. Verfahren gemäß Anspruch 2, 3, oder 4, **dadurch gekennzeichnet, dass** die Stufe (b) die folgenden Zwischenstufen beinhaltet, bestehend aus:
(b1) dem Suchen eines Geheimnisses im laufenden Verzeichnis der Ebene (Ni) und Überprüfung des Vorhandenseins des Geheimnisses (S) innerhalb der Anwendung,
(b2) wenn dieses Geheimnis vorhanden ist, Überprüfung, dass die Darstellung des Geheimnisses erfolgreich ist;
= wenn die Darstellung des Geheimnisses erfolgreich ist, wird das mit dem Geheimnis (S) zusammenhängende Recht auf der Ebene (Ni) der laufenden Anwendung gewährt;
= wenn die Darstellung nicht erfolgreich ist, wird das mit dem Geheimnis (S) zusammenhängende Recht nicht gewährt, und der Darstellungsversuch wird beendet;
(b3) wenn das Geheimnis in der laufenden Anwendung der Ebene (Ni) nicht vorhanden ist, in der Suche, ob dieses Geheimnis (S) innerhalb der übergeordneten Anwendung N(i-1) existiert.
(b4) Wenn dieses Geheimnis (S) in der übergeordneten Anwendung der Ebene B(i-1) vorhanden ist, in der Überprüfung, dass die Darstellung erfolgreich ist:
= Wenn die Darstellung erfolgreich ist, wird das mit dem Geheimnis (S) zusammenhängende Recht in der laufenden Anwendung der Ebene (Ni) gewährt,
= wenn die Darstellung nicht erfolgreich ist, wird das mit dem Geheimnis (S) zusammenhängende Recht nicht gewährt, und der Darstellungsversuch wird beendet;
(b5) Wenn das Geheimnis innerhalb der übergeordneten Anwendung der Ebene N(i-1) nicht vorhanden ist, in der Suche nach dem Vorhandensein des Geheimnisses (S) in der Anwendung der Ebene N(i--2) gemäß der hierarchischen Achse und der Überprüfung, dass die Darstellung erfolgreich ist,
und so weiter, bis zur höchsten hierarchischen Ebene, solange die Existenz des Geheimnisses (S) nicht festgestellt worden ist;
(b6) Wenn das Geheimnis (S) nicht festgestellt worden ist, wird der Darstellungsversuch beendet.

6. Verfahren gemäß Anspruch 2 bis 5, **dadurch gekennzeichnet, dass** die Stufe (c) in der Anwendung der folgenden Regel besteht, bestehend aus:
(RG5) Zulassung einer die Kenntnis eines Geheimnisses (S) erforderlichen Funktion wenn, und nur wenn beim Durchlaufen des Baums gemäß der hierarchischen Achse der laufenden Anwendung zur Wurzelanwendung das erste Geheimnis (S) in wenigstens einer der Anwendungen bekannt ist, die dem Baumabschnitt angehören, dedden Begrenzungen die laufende Anwendung und die im Geheimnis (S) enthaltene Anwendung ist.

7. Verfahren gemäß Anspruch 1 bis 6, **dadurch gekennzeichnet, dass** die Stufe (c) folgende Stufen umfasst, bestehend aus:
(c1) der Überprüfung, dass ein Sicherheitsregister der laufenden Anwendung der Ebene Ni zugeordnet ist;
(c2) der Zulassung der Funktion, wenn das Sicherheitsregister das erforderliche Recht beinhaltet und Beendigung der Überprüfung;
(c3) der Suche nach dem Vorhandensein des Referenzgeheimnisses S innerhalb der laufenden Anwendung des Niveaus Ni, wenn kein Sicherheitsregister der laufenden Anwendung zugeordnet ist oder wenn das zugeordnete Register das erforderliche Recht nicht beinhaltet;
(c4) der Verweigerung der Funktion und der Beendigung der Überprüfung, wenn das Geheimnis innerhalb der laufenden Anwendung vorhanden ist;
(c5) Überprüfung, dass ein Sicherheitsregister der übergeordneten Anwendung der Ebene N(i-1) der laufenden Anwendung zugeordnet ist, wenn das Referenzgeheimnis S innerhalb der laufenden Anwendung der Ebene Ni nicht vorhanden ist;
(c6) Zulassung der Funktion und Beendigung der Überprüfung, wenn das der übergeordneten Anwendung zugeordnete Sicherheitsregister das erforderliche Recht zur Nutzung der Funktion beinhaltet;
(c7) Suche nach dem Vorhandensein des Referenzgeheimnisses S innerhalb der übergeordneten Anwendung der Ebene N(i-1) der laufenden Anwendung, wenn kein Sicherheitsregister der übergeordneten Anwendung zugeordnet ist oder wenn das zugeordnete Sicherheitsregister das erforderliche Recht nicht beinhaltet;
(c8) Verweigerung der Funktion und Beendigung der Überprüfung, wenn das Referenzgeheimnis S innerhalb der übergeordneten Anwendung der Ebene N(i-1) vorhanden ist;
(c9) Überprüfung, dass ein Sicherheitsregister der der übergeordneten Anwendung übergeordneten Anwendung der Ebene N(i-2) der laufenden Anwendung gemäß der hierarchischen Achse der laufenden Anwendung zur Wurzelanwendung zugeordnet ist, wenn das Referenzgeheimnis S innerhalb der übergeordneten Anwendung der Ebene N(i-1) nicht vorhanden ist, und so weiter, solange, bis das Vorhandensein des Referenzgeheimnisses S nicht festgestellt worden ist;
(c10) Verweigerung der Funktion und Beendigung der Überprüfung, wenn das Geheimnis nicht festgestellt worden ist.

## Claims

1. A system for managing the security of data processing applications, **characterised in that**:
- the data processing applications are recorded in files in directories (Rep1, Rep2, Rep31, Rep32, Rep41, Rep 42, Rep51, Rep52) organised in a tree with n levels, the level 1 directory (Rep1) being of the highest level, and
- a number r of security registers (R) each being able to be allocated to a single directory and each security register (R) containing all the rights or secrets S1 to Sp which have been granted under a directory.

2. A method for managing the security of data processing applications in a system according to Claim 1, **characterised in that** it comprises the following steps consisting in:
(a) storing in security registers (R) the rights (S1 to Sp) granted under a directory (Rep) according to given rules (RG1, RG2, RG3),
(b) seeking in the tree the secret presented, and
(c) checking the knowledge of the right or rights at the level of the data processing application.

3. A method according to Claim 2, **characterised in that** the storage rules of step (a) are as follows:
(RG1) allocation of a security register (R) to the current directory as soon as a right is granted under this directory or updating of the said security register if a right has already been granted under this directory,
(RG2) loss of the link connecting the former current directory to its security register when a new directory is selected except if the directory selected is the child of the former current directory;
(RG3) allocation of the security register which was allocated longest ago to the new current directory if the security registers are all allocated.

4. A method according to Claim 2 or 3, **characterised in that** step (b) consists in applying the following rule consisting in:
(RG4) checking that the secret presented (S) is known in the current directory (Ni) or in a higher-level directory.

5. A method according to Claim 2, 3 or 4, **characterised in that** step (b) comprises the following intermediate steps consisting in:
(b1) seeking a secret in the current directory of level (Ni) and checking the existence of the secret (S) within the application,
(b2) if this secret (S) exists, checking that the presentation of the secret has succeeded;
= if the presentation has succeeded, the right associated with the secret (S) is granted at the level (Ni) of the current application;
= if the presentation has failed, the right associated with the secret (S) is not granted and the attempted presentation is terminated;
(b3) if this secret (S) does not exist in the current application of level (Ni), seeking whether this secret (S) exists within the parent application of level N(i-1) ;
(b4) if this secret (S) exists in the parent application of level B(i-1), checking that the presentation has succeeded:
= if the presentation has succeeded, the right associated with the secret (S) is granted in the current application of level (Ni),
= if the presentation has failed, the right associated with the secret (S) is not granted and the attempted presentation is terminated;
(b5) if the secret does not exist within the parent application of level N(i-1), seeking the existence of the secret (S) at the application of level N(i-2) according to the hierarchical access and checking that the presentation has succeeded,
and so on as far as the highest hierarchical level as long as the existence of the secret (S) has not been discovered;
(b6) If the secret (S) has not been discovered, the attempted presentation is terminated.

6. A method according to one of the preceding claims 2 to 5, **characterised in that** step (c) consists in applying the following rule consisting of:
(RG5) Authorisation of a function requiring the knowledge of a secret (S) if and only if, by running through the tree along the hierarchical axis of the current application towards the root application, the first secret (S) is known to at least one of the applications belonging to the tree section whose boundaries are the current application and the application containing the secret (S).

7. A method according to one of the preceding claims 1 to 6, **characterised in that** step (c) comprises the following steps consisting in:
(c1) verifying that a security register is associated with a current application of level Ni;
(c2) authorising the function if the security register contains the required right and terminating the verification;
(c3) seeking the existence of the reference secret S within the current application of level Ni if no security register is associated with the current application or if the associated register does not contain the required right;
(c4) refusing the function and terminating the verification if the secret exists within the current application;
(c5) verifying that a security register is associated with the parent application of level N(i-1) of the current application if the reference secret S does not exist within the current application of level Ni;
(c6) authorising the function and terminating the verification if the security register associated with the parent application contains the required right for using the function;
(c7) seeking the existence of the reference secret S within the parent application of level N(i-1) of the current application if no security register is associated with the parent application or if the associated security register does not contain the required right;
(c8) refusing the function and terminating the verification if the reference secret S exists within the parent application of level N(i-1);
(c9) verifying that a security register is associated with the grandparent application of level N(i-2) of the current application along the hierarchical axis of the current application towards the root application, if the reference secret S does not exist within the parent application of level N(i-1), and so on as long as the existence of the reference secret S has not been discovered;
(c10) refusing the function and terminating the verification if the secret has not been discovered.
